# EUROPEAN PATENT SPECIFICATION

(11) **EP 1 841 623 B1**
(45) Date of publication and mention of the grant of the patent: **07.09.2011**
(21) Application number: 06701487.8
(22) Date of filing: 25.01.2006
(51) Int. Cl.: B60R 21/264

(54) **AN AIR-BAG INFLATOR**
AIRBAG-AUFBLASVORRICHTUNG
DISPOSITIF DE GONFLAGE DE COUSSIN D'AIR

(30) Priority: 27.01.2005 GB 0501772
(43) Date of publication of application: 10.10.2007
(73) Proprietor: AUTOLIV DEVELOPMENT AB, 447 83 Vargarda (SE)
(72) Inventor: KRUSE, Dion, S-441 33 Alindsås (SE)
(74) Representative: Beattie, Alex Thomas Stewart
(86) International application number: PCT/SE2006/000101
(87) International publication number: WO 2006/080881

(56) References cited:
- US-A- 6 149 193
- US-A1- 2003 137 133
- US-A1- 2003 137 133
- US-A1- 2003 184 067
- US-A1- 2004 050 281
- US-A1- 2004 050 281

## Description

**THE PRESENT INVENTION** relates to an air-bag inflator and relates to an air-bag provided with such an inflator.

Air-bags are provided in motor vehicles, to be inflated in the event that an accident should occur, in order to provide protection for an occupant of the vehicle.

Air-bags have to be inflated within a very brief period of time if the air-bag is to provide the desired degree of protection. For example, an air-bag which is mounted in front of the occupant of a motor vehicle such as a motor car should become fully inflated in a period of 60 ms in a typical front impact situation. An air-bag which is mounted to the side of a seat occupant may need to be inflated in a time period of 20 ms or less if adequate protection is to be provided in a side impact situation.

Because an air-bag has to be inflated in such a short period of time, gas generators are utilised which present a relatively high flow rate of gas, and the air-bags thus inflate very rapidly or very aggressively.

A problem can arise if an occupant of a vehicle is not in the anticipated position when an air-bag is inflated. Thus, a problem can arise if a seat occupant is leading forwardly, with their head almost touching the dashboard or steering wheel (where an air-bag to provide protection in a frontal impact situation is conventionally stored) when an accident occurs. Should a vehicle occupant be "out of position" when an accident occurs, the air-bag, which inflates aggressively, may impact with the occupant and injure the occupant. A particular difficulty arises if the occupant is of low body mass such as, for example, a child of six years. A child of such an age is, ordinarily, not seated in a special child seat, but instead occupies a conventional "adult" seat. Thus there is a substantial risk that a young vehicle occupant of this type might be "out of position" at the instant that an accident occurs.

Consequently it is desirable to provide an inflator for an air-bag which will permit an air-bag to be inflated in such way that the risk of injury to a young occupant who is out of position at the instant that an accident occurs is minimised. However, of course, it is important that an air-bag inflated with such an inflator should provide a satisfactory degree of protection when the vehicle is occupied by an adult occupant.

Whilst various proposals have been made to control the inflation of an air-bag in dependence upon the sensed weight of a seat occupant, such arrangements are complicated and are therefore costly. Of course, an increase in complication can also give rise to an increase in the risk of malfunction, and thus there is a requirement for a simple and un-complicated gas generator which will provide an appropriate flow of gas so that an air-bag may be inflated in such a way that it will not injure a young seat occupant who is out of position, but it will still provide adequate protection for an adult seat occupant. The present invention seeks to provide an inflator of this type.

US2003/0137133 discloses an inflator according to the preamble of claim 1 and air bag system for protecting a passenger seated on the front passenger seat of a vehicle. In an initial stage, the air bag is inflated mildly. In the subsequent stage, the bag is inflated also mildly. The directivity of produced gas can be reduced. The air bag can be inflated mildly while maintaining a large area. The air bag system comprises an air bag case having an opening on its top side, an inflator disposed inside the air bag case, the aforementioned air bag folded in the air bag case, and a diffuser mounted between the inflator and the opening in the case. The air bag is placed in a side-by-side relation to the inflator and located behind the inflator inside the case. The diffuser is provided with numerous holes for supplying the gas. The diffuser acts to regulate flow of the gas from the inflator. At least when the gas is produced from the inflator, a space is created between the outer surface of the inflator and the diffuser.

According to one aspect of this invention there is provided an inflator for an air-bag, the inflator being configured to provide gas to inflate the airbag, characterised in that the inflator is arranged and configured to provide a first flow of gas during a first phase of operation which has a duration of 10 to 30 ms, a second, greater flow of gas during a second phase of operation which has a duration of 5 to 15 ms and a third even greater flow of gas during a further phase of operation, the third flow of gas having a predetermined duration such that the total duration of all three stages is between 50 and 70 ms.

Another aspect of the invention provides an inflator according to the above in combination with an air-bag, the air-bag being retained in a housing, the housing having a door, the inflator and air-bag being such that the air-bag is inflated sufficiently to initiate opening of the door of the air-bag housing, the second phase is such that the air-bag is inflated and at least a significant part of the air-bag moves through the open door, and during the third phase the air-bag is completely filled.

Advantageously, the inflator is such that, when tested within a test tank having a capacity of 146 litres, the pressure generated during the first phase is between 20 and 30 kPa, the pressure generated within the second phase is 40 and 60 kPa and the pressure generated in the third phase is between 150 and 350 kPa.

Preferably, the inflator is a multi-stage inflator.

Conveniently, the inflator is a double-stage inflator.

Advantageously, the inflator is a triple-stage inflator.

Preferably, the inflator comprises three independently triggered pyrotechnic gas generating cells.

Conveniently, two of the said cells are each smaller than the third cell, the inflator being configured such that a first one of the two smaller cells is actuated to provide the first flow of gas, and a second one of the two smaller cell is actuated after actuation of the first smaller cells to generate the second flow of gas, and the third larger cell is actuated after actuation of the two smaller cells to generate the third flow of gas.

Advantageously, the inflator incorporates gas generating units containing compressed gas.

Preferably, the inflator includes gas generating units containing both pyrotechnic charges and compressed gas.

In order that the invention may be more readily understood, and so that further features thereof may be appreciated, the invention will now be described, by way of example, with reference to the accompanying drawings in which:
FIGURE 1 is a diagrammatic sectional view of a gas generator in accordance with the invention,
FIGURE 2 is a graphical representation of pressure within a test tank measured with respect to time, illustrating the effect of the inflator of the invention when tested within the test tank,
FIGURES 3 to 6 are diagrammatic figures illustrating inflation of the air-bag, with an "out of position" vehicle occupant, illustrating successive stages of the inflation of the air-bag from the instant of impact, in Figure 3, 25 ms after impact in Figure 4, 40 ms after impact in Figure 5 and 55 ms after impact in Figure 6, and
FIGURES 7 to 10 are corresponding figures illustrating a conventional air-bag, again showing the situation following an impact at 0 ms following the impact, 25 ms, 50 ms and 55 ms respectively.

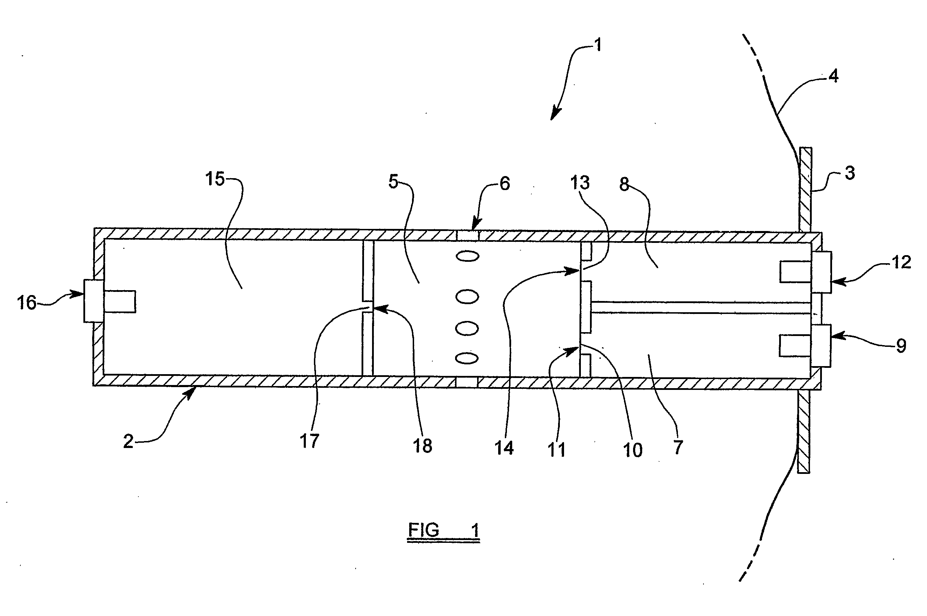

Referring initially to Figure 1 of the accompanying drawings, a gas generator 1 comprises a generally cylindrical housing 2 provided with a mounting flange 3 adjacent one end thereof. The mounting flange 3 may be used to connect the gas generator to an air-bag 4 (only part of the air-bag is shown).

The cylindrical housing 2 has a central plenum chamber 5, the plenum chamber being provided with a plurality of gas vent apertures 6 which communicate from the plenum chamber 5 to the interior of the air-bag 4. Located to one side of the plenum chamber are two adjacent cells 7,8 each of which contain pyrotechnic material.

The cell 7 is provided with a squib 9 to ignite the pyrotechnic material. The cell 7 communicates with the plenum chamber by means of an aperture 10, the aperture 10 initially being sealed by means of a rupturable foil 11.

Similarly the cell 8 is provided with a pyrotechnic squib 12 to ignite the pyrotechnic material and the cell 8 also communicates with the plenum chamber 6 by means of an aperture 13, the aperture 13 initially being sealed by means of foil 14.

The cells 7 and 8 are of substantially the same size.

At the other end of the housing 2, a third cell 15 is provided, the cell 15 being larger than the combined size of the first two cells 7 and 8. The cell 15 contains pyrotechnic material and is associated with a squib 16 to ignite the pyrotechnic material. The cell 15 communicates with the plenum chamber 5 by means of an aperture 17, the aperture 17 initially sealed by means of a rupturable foil 18.

It is to be appreciated that in an accident situation, as will be described in more delay below, initially the squib 9 is actuated to ignite the pyrotechnic material in the first cell 7, and the pyrotechnic material burns to produce gas. The gas pressure within the cell will rise until a gas pressure exists which will rupture the foil 11 and flows through the plenum chamber 5 and through the outlet aperture 6 to commence inflation of the air-bag.

A predetermined period of time after actuation of the squib 9, the squib 12 is actuated, thus igniting the pyrotechnic material within the second cell 8. The pyrotechnic material within the second cell 8 burns creating gas. The gas pressure within the second cell will rise until a gas pressure exists which ruptures the foil 14 closing the aperture 13. Gas thus flows from the second cell 8 into the plenum chamber 5 and out through the outlet aperture 6 to continue inflation of the air-bag.

Finally, after a predetermined time delay, the squib 16 is actuated to ignite the pyrotechnic material within the third cell 15. Gas is generated which generates a gas pressure in the cell which ruptures the foil 18, permitting gas to flow from the cell 15 through the aperture 17 into the plenum chamber 5 and thus, through the outlet aperture 6 into the air-bag 4 to complete inflation of the air-bag.

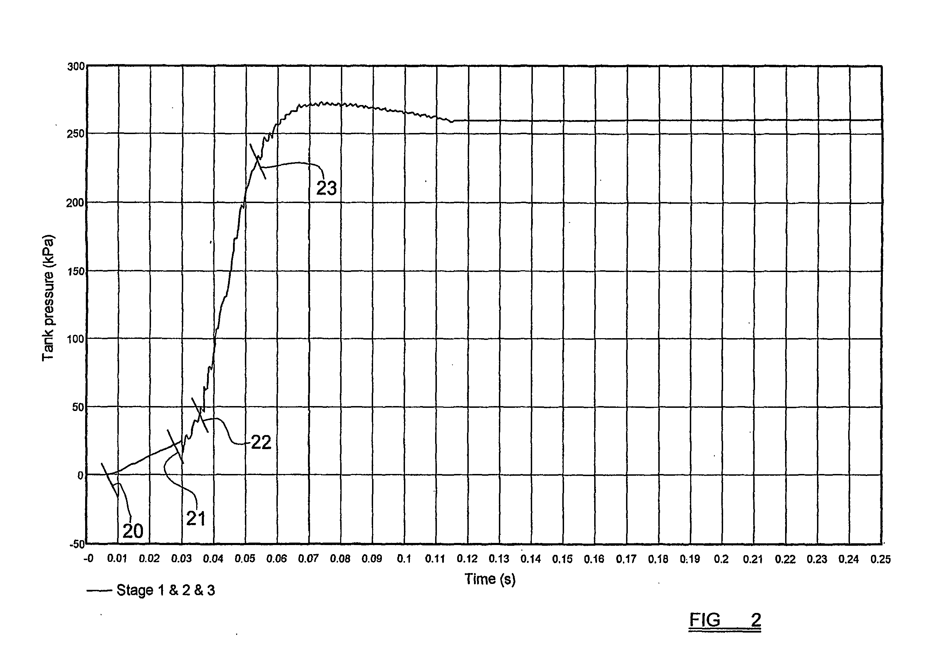

Turning now to Figure 2, it is to be understood that this figure is a graphical representation of the pressure present within a pressure monitoring test tank having a capacity of a 146 litres, on actuation of the gas generator as shown in Figure 1. Pressure within the chamber of the test tank is plotted against time.

The squib 9 associated with first cell 7 is actuated at the instant 0 illustrated on the graphical figure of Figure 2. This instant is the instant at which a crash signal is generated by a crash sensor. Pressure, during the first few ms, does not rise, as during this brief of time the pyrotechnic material within the first cell begins to burn. The pressure within the cell rises until the foil 10 is ruptured. Gas then begins to flow from the inflator, the flow of gas being relatively low. The rise in pressure is consequently relatively low and uniform, during a first stage of inflation which can be considered to commence at the point 20 and terminate at the point 21 of the graph of Figure 2. The duration of this first phase of gas generation is, typically, 10 ms to 30 ms, and in the graphical figure shown the duration is just less than 30 ms. During this time period the pressure generated within the test cell rises to a maximum of between 20 and 30 kPa. In the inflation of an air-bag, this first stage would inflate the air-bag sufficiently to initiate the opening of the doors of the air-bag housing, for example open the doors of the air-bag housing by about 5 cm, and to enable the air-bag to begin to inflate.

The second stage of inflation then commences when the second squib 12 associated with the second cell 8 is actuated, and gas from the second cell 8 ruptures the foil 14 sealing the aperture 13 so that the gas from the second cell flows into the plenum chamber 5. The plenum chamber 5 is now receiving gas from two cells, namely the cell 7 and also the cell 8. The pressure of gas within the test chamber thus rises more rapidly. This rapid rise is shown as the second stage of inflation on the graphical figure extending from the point 21 to the point 22 on the graph of Figure 2. This second stage of inflation can have a duration of between 5 ms and 15 ms. The maximum pressure achieved at the end of the second stage of inflation is between 40 and 60 kPa. In the inflation of an air-bag this stage will continue to inflate the air-bag relatively gently so that the doors of the air-bag housing open fully. However, the doors will open relatively gently, so that if a sat occupant is out of position, and located very close to the doors, the doors will not injure the occupant. The air-bag itself may begin to emerge through the open doors.

Subsequently the third squib 16 associated with the third chamber 15 is actuated and gas from the third chamber will also flow into the plenum chamber 5, thus commencing the final stage of inflation which, on the graphical figure, runs from 22 to point 23. During this stage of inflation the air-bag is inflated very rapidly, and inflation is fully completed. As the air-bag emerges through the doors of the air-bag housing vent apertures provided on the air-bag may be exposed and become effective to vent gas from within the air-bag. Such venting may prevent the air-bag from becoming too stiff or too unyielding, thus minimising the risk of the occupant being injured. After a significant part of the air-bag has emerged from the housing the air-bag may expand sideways as well as forwardly, which is favourable for the occupant. This stage of inflation can have a duration such that the total duration of gas generation ends 50 to 70 ms after the instant 0. At the end of the final stage of inflation the pressure in the test chamber is between 150 and 350 kPa.

In the graphical figure the three stages of inflation are completed within approximately 55 ms. This is quite satisfactory for a typical driver's air-bag or air-bag to provide protection for a front seat passenger. Some air-bags may be inflated over a longer period of time. Some air-bags may have to be inflated in a shorter period of time. However, by inflating the air-bag in three distinct phases, as described above, advantages can be achieved, as will become clear from the following description.

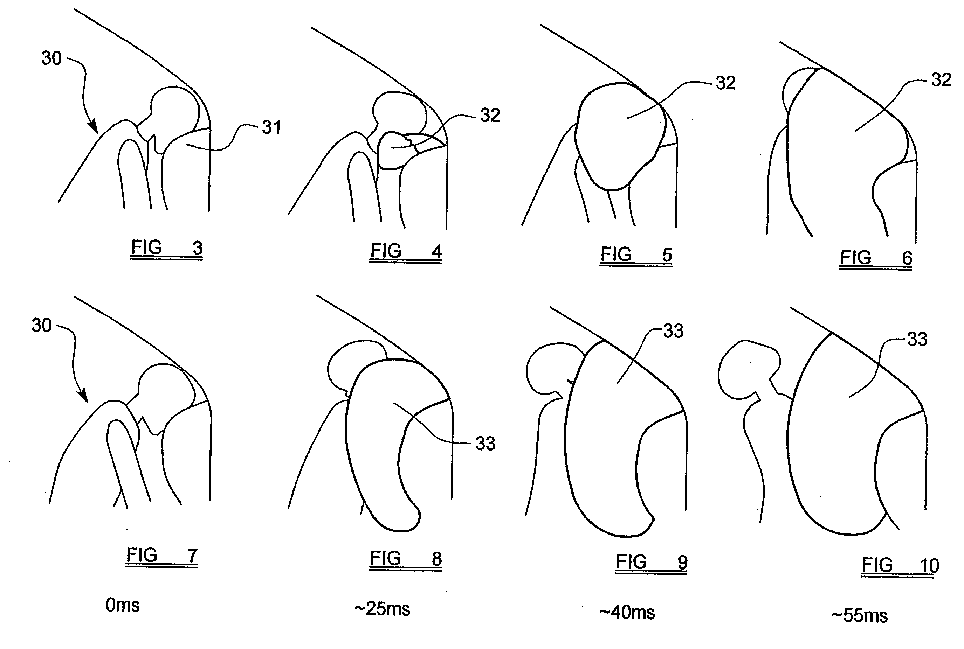

Figure 3 is a diagrammatic figure illustrating a seat occupant 30 who is out of position, the head of the seat occupant resting on a vehicle dashboard 31. Figure 3 illustrates the situation that exists at the commencement of an accident.

Figure 4 illustrates the situation 25 ms after commencement of the accident. During the first 25 ms, the initial stage of inflation of the air-bag has occurred, with gas from the first cell 7 being injected into the air-bag. The airbag 32 inflates slowly opening the door of the air-bag housing by about 5 cm and gently moving the head of the seat occupant 30 away from the dashboard. The head of the occupant is not given a violent or sudden acceleration.

During the following 15 ms, the air-bag 32 continues to inflate until the air-bag has the condition shown in Figure 5. This inflation is achieved with gas from both the first cell 7 and the second cell 8 of the inflator. Thus the air-bag inflates more rapidly than during the first phase of inflation, but the air-bag is still not being inflated in a particularly aggressive manner. The air-bag inflates towards the occupant. The head of the occupant is thus being given a continuing gentle acceleration.

During the final 15 ms of the inflation being illustrated, the air-bag inflates rapidly to become fully inflated, as shown in Figure 6. The out of position occupant is thus fully protected by the air-bag, but the out of position occupant has not been given an over-severe acceleration. Thus the risk of injury to the out of position occupant, even if the out of position occupant is young child, has been minimised. As the air-bag is fully inflated in 55 ms the air-bag will protect an adult seat occupant adequately.

Figure 7 to 10 are provided for purposes of comparison and illustrate a conventional air-bag during inflation. As can be seen Figure 7 corresponds directly with Figure 3 showing the out of position occupant at the commencement of the accident.

On inflation of a conventional air-bag a substantial quantity of gas is injected into the air-bag. Thus, at 25 ms following commencement of inflation, as shown in Figure 8, the air-bag 33 has a substantial volume and the out of position occupant has been driven rearwardly away from the dashboard with a very substantial acceleration.

As shown in Figure 9, at 40 ms following the commencement of inflation the air-bag 33 is almost fully inflated, and the occupant has been given a very substantial rearward acceleration.

As shown in Figure 10 the air-bag 33 is fully inflated, and the occupant has been moved to such a position that the head is leaning backwardly, thus risking substantial neck injury.

It is to be appreciated, therefore, that the described air-bag provided with an inflator as shown in Figure 2, will inflate relatively gently at the beginning of the inflation procedure, which provides a very desirable effect if there is an out of position occupant, as exemplified in Figure 3 to 6. However, the air-bag is fully inflated within a period of time of 55 ms following commencement of inflation and thus the air-bag will provide adequate protection for an adult seat occupant.

Whilst the invention has been described with reference to an embodiment in which the inflator is provided with three cells containing pyrotechnic material, in an alternative embodiment the pyrotechnic material may be contained in only two cells, one cell being relatively small and being associated with the squib that is actuated initially in response to a sensed accident situation, the second cell being somewhat larger and being associated with a squib that is actuated at a predetermined period of time after the sensing of an accident situation. The burning characteristic of the pyrotechnic material in the second cell is selected to provide an overall inflation characteristic equivalent to that described above.

Whilst the invention has been described with reference to an embodiment in which a pyrotechnic gas generator is to be utilised as the inflator is to be appreciated that in modified embodiments of the invention the inflator may be a so called "cold" gas generator, which includes one or more bottles containing compressed gas, or may be a "hybrid" inflator in which the inflator includes a combination of bottles containing compressed gas and a pyrotechnic material to generate hot gas.

It is to be appreciated that should a vehicle be involved in a very severe impact it may be desirable to inflate an air-bag with extreme rapidity, regardless of the risk of injuring an out of position occupant, the rationale being that if the air-bag is not inflated with sufficient rapidity, the air-bag will not protect an adult occupant who is in the ordinary position, and the probability of the occupant being out of position is relatively low. Whilst, of course, the present design embodies concern for the out of position occupant, it is only very rarely that an occupant is out of position at the very instant that an accident occurs.

Consequently it is envisaged that an air-bag provided with an inflator in accordance with the invention may be inflated in response to a signal from an accident sensor, the accident sensor providing different signals depending upon the severity of the accident. If a very severe accident is detected all three squibs may be provided with an actuating signal immediately, so that gas generated in all three cells of the gas generator may immediately inflate the air-bag, thus enabling the air-bag to become fully inflated in the least possible time.

In the present Specification "comprises" means "includes or consists of" and "comprising" means "including or consisting of".

## Claims

1. An inflator (1) for an air-bag (4), the inflator (1) being configured to provide gas to inflate the air-bag (4), **characterised in that** the inflator (1) is arranged and configured to provide a first flow of gas during a first phase of operation which has a duration of 10 to 30 ms, a second, greater flow of gas during a second phase of operation which has a duration of 5 to 15 ms and a third even greater flow of gas during a further phase of operation, the third flow of gas having a predetermined duration such that the total duration of all three stages is between 50 and 70 ms.

2. An inflator (1) according to claim 1 in combination with an air-bag (4), the air-bag (4) being retained in a housing, the housing having a door, the inflator (1) and air-bag (4) being such that the air-bag (4) is inflated sufficiently to initiate opening of the door of the air-bag housing, the second phase is such that the air-bag (4) is inflated and at least a significant part of the air-bag (4) moves through the open door, and during the third phase the air-bag (4) is completely filled.

3. An inflator (1) according to claim 1 or 2 wherein the inflator (1) is such that, when tested within a test tank having a capacity of 146 litres, the pressure generated during the first phase is between 20 and 30 kPa, the pressure generated within the second phase is 40 and 60 kPa and the pressure generated in the third phase is between 150 and 350 kPa.

4. An inflator (1) according to any one of the preceding claims wherein the inflator (1) is a multi-stage inflator.

5. An inflator (1) according to any one of the preceding claims wherein the inflator (1) is a double-stage inflator.

6. An inflator (1) according to any one of claims 1 to 4 wherein the inflator (1) is a triple-stage inflator.

7. An inflator (1) according to Claim 6 wherein the inflator (1) comprises three independently triggered pyrotechnic gas generating cells (7,8,15).

8. An inflator (1) according to Claim 7 wherein two of the said cells (7,8) are each smaller than the third cell (15), the inflator (1) being configured such that a first one of the two smaller cells (7,8) is actuated to provide the first flow of gas, and a second one of the two smaller cell (7,8) is actuated after actuation of the first smaller cells (7,8) to generate the second flow of gas, and the third larger cell (15) is actuated after actuation of the two smaller cells (7,8) to generate the third flow of gas.

9. An inflator (1) according to any one of claims 1 to 5 wherein the inflator (1) incorporates gas generating units (7,8,15) containing compressed gas.

10. An inflator according to any one of Claims 1 to 5 wherein the inflator (1) includes gas generating units (7,8,15) containing both pyrotechnic charges (9,12,16) and compressed gas.

## Patentansprüche

1. Aufblasvorrichtung (1) für einen Airbag (4), wobei die Aufblasvorrichtung (1) dazu konfiguriert ist, Gas bereitzustellen, um den Airbag (4) aufzublasen, **dadurch gekennzeichnet, dass** die Aufblaseinrichtung (1) dazu angeordnet und konfiguriert ist, eine erste Gasströmung während einer ersten Betriebsphase bereitzustellen, die eine Dauer von 10 bis 30 ms hat, eine zweite, größere Gasströmung während einer zweiten Betriebsphase, die eine Dauer von 5 bis 15 ms hat, und eine dritte, noch größere Gasströmung während einer weiteren Betriebsphase, wobei die dritte Gasströmung eine vorgegebene Dauer hat, so dass die Gesamtdauer aller drei Stufen zwischen 50 und 70 ms beträgt.

2. Aufblasvorrichtung (1) nach Anspruch 1 in Kombination mit einem Airbag (4), wobei der Airbag (4) in einem Gehäuse festgehalten wird, das Gehäuse eine Klappe aufweist, die Aufblasvorrichtung (1) und der Airbag (4) dergestalt sind, dass der Airbag (4) ausreichend aufgeblasen wird, um ein Öffnen der Klappe des Airbaggehäuses auszulösen, die zweite Phase dergestalt ist, dass der Airbag (4) aufgeblasen wird und zumindest ein beträchtlicher Teil des Airbags (4) sich durch die offene Klappe bewegt und der Airbag (4) während der dritten Phase vollständig gefüllt wird.

3. Aufblasvorrichtung (1) nach Anspruch 1 oder 2, wobei die Aufblasvorrichtung (1) dergestalt ist, dass, wenn sie innerhalb eines Testtanks mit einer Kapazität von 146 Litern getestet wird, der während der ersten Phase erzeugte Druck zwischen 20 und 30 kPa beträgt, der innerhalb der zweiten Phase erzeugte Druck 40 und 60 kPa beträgt und der in der dritten Phase erzeugte Druck zwischen 150 und 350 kPa beträgt.

4. Aufblasvorrichtung (1) nach irgendeinem der vorhergehenden Ansprüche, wobei die Aufblasvorrichtung (1) eine mehrstufige Aufblasvorrichtung ist.

5. Aufblasvorrichtung (1) nach irgendeinem der vorhergehenden Ansprüche, wobei die Aufblasvorrichtung (1) eine zweistufige Aufblasvorrichtung ist.

6. Aufblasvorrichtung (1) nach irgendeinem der Ansprüche 1 bis 4, wobei die Aufblasvorrichtung (1) eine dreistufige Aufblasvorrichtung ist.

7. Aufblasvorrichtung (1) nach Anspruch 6, wobei die Aufblasvorrichtung (1) drei unabhängig ausgelöste pyrotechnische Gas erzeugende Zellen (7, 8, 15) umfasst.

8. Aufblasvorrichtung (1) nach Anspruch 7, wobei zwei der Zellen (7, 8) jeweils kleiner als die dritte Zelle (15) sind, die Aufblasvorrichtung (1) so konfiguriert ist, dass eine erste der zwei kleineren Zellen (7, 8) betätigt wird, um die erste Gasströmung bereitzustellen, und eine zweite der zwei kleineren Zellen (7, 8) nach der Betätigung der ersten kleineren Zellen (7, 8) betätigt wird, um die zweite Gasströmung zu erzeugen, und die dritte größere Zelle (15) nach der Betätigung der zwei kleineren Zellen (7, 8) betätigt wird, um die dritte Gasströmung zu erzeugen.

9. Aufblasvorrichtung (1) nach irgendeinem der Ansprüche 1 bis 5, wobei die Aufblasvorrichtung (1) Gas erzeugende Einheiten (7, 8, 15) beinhaltet, die Druckgas enthalten.

10. Aufblasvorrichtung nach irgendeinem der Ansprüche 1 bis 5, wobei die Aufblasvorrichtung (1) Gas erzeugende Einheiten (7, 8, 15) einschließt, die sowohl pyrotechnische Ladungen (9, 12, 16) als auch Druckgas enthalten.

## Revendications

1. Un dispositif de gonflage (1) de coussin d'air (4) configuré pour fournir du gaz pour le gonflage (1) du coussin d'air (4), **se caractérisant par le fait que** le dispositif de gonflage (1) est disposé et configuré pour fournir un premier débit de gaz pendant une première phase de fonctionnement d'une durée allant de 10 à 30 ms, un deuxième débit de gaz plus important pendant une deuxième phase de fonctionnement d'une durée allant de 5 à 15 ms et un troisième débit de gaz encore plus important pendant une troisième phase de fonctionnement, le troisième débit de gaz ayant une durée prédéterminée telle que la durée totale des trois phases se situe entre 50 et 70 ms.

2. Un dispositif de gonflage (1) selon la revendication 1 utilisé en combinaison avec un coussin d'air (4), le coussin d'air (4) étant maintenu dans un boîtier, le boîtier étant muni d'une porte, le dispositif de gonflage (1) et le coussin d'air (4) étant tels que le coussin d'air (4) est gonflé suffisamment pour déclencher l'ouverture de la porte du boîtier du coussin d'air, la deuxième phase étant telle que le coussin d'air (4) est gonflé et qu'au moins une partie importante du coussin d'air (4) passe par la porte ouverte et, pendant la troisième phase, le coussin d'air (4) est entièrement rempli.

3. Un dispositif de gonflage (1) selon la revendication 1 ou 2, dans lequel le dispositif de gonflage (1) est tel que, lorsqu'on le soumet à des essais dans un bac d'essai d'une capacité de 146 litres, la pression produite pendant la première phase se situe entre 20 et 30 kPa, la pression produite au cours de la deuxième phase se situe entre 40 et 60 kPa et la pression produite au cours de la troisième phase se situe entre 150 et 350 kPa.

4. Un dispositif de gonflage (1) selon n'importe laquelle des revendications précédentes, dans lequel le dispositif de gonflage (1) est un dispositif de gonflage multi-étages.

5. Un dispositif de gonflage (1) selon n'importe laquelle des revendications précédentes, dans lequel le dispositif de gonflage (1) est un dispositif de gonflage à deux étages.

6. Un dispositif de gonflage (1) selon n'importe laquelle des revendications 1 à 4, dans lequel le dispositif de gonflage (1) est un dispositif de gonflage à trois étages.

7. Un dispositif de gonflage (1) selon la revendication 6, dans lequel le dispositif de gonflage (1) se compose de trois cellules de production de gaz pyrotechnique à déclenchement indépendant (7, 8, 15).

8. Un dispositif de gonflage (1) selon la revendication 7, dans lequel deux des cellules (7, 8) sont plus petites que la troisième (15), le dispositif de gonflage (1) étant configuré de manière telle qu'une première des deux cellules plus petites (7, 8) est actionnée pour fournir le premier débit de gaz et qu'une deuxième des deux cellules plus petites (7, 8) est actionnée après la première cellule plus petite (7, 8) de façon à produire le deuxième débit de gaz, et la troisième cellule plus grande (15) est actionnée après les deux plus petites (7, 8) de façon à fournir le troisième débit de gaz.

9. Un dispositif de gonflage (1) selon n'importe laquelle des revendications 1 à 5, dans lequel le dispositif de gonflage (1) comprend des dispositifs de production de gaz (7, 8, 15) contenant du gaz comprimé.

10. Un dispositif de gonflage selon n'importe laquelle des revendications 1 à 5, dans lequel le dispositif de gonflage (1) comprend des dispositifs de production de gaz (7, 8, 15) contenant des charges pyrotechniques (9, 12, 16) et du gaz comprimé.
